# EUROPEAN PATENT APPLICATION

(11) **EP 2 527 108 A1**
(43) Date of publication of application: **28.11.2012**
(21) Application number: 12169036.6
(22) Date of filing: 23.05.2012
(51) Int. Cl.: B27D 5/00, B65G 15/32, B27B 25/04

(54) **Edgebanding machine**

(30) Priority: 24.05.2011 IT MO20110130
(71) Applicant: SCM Group S.p.A., 47900 Rimini (IT)
(72) Inventor: Baldacci, Marco, 47924 Rimini (RN) (IT); Spazzoli, Andrea, 47814 Bellaria Igea Marina (RN) (IT)
(74) Representative: Pandolfi, Paolo

(57) **Abstract**

An edgebanding machine (1) for edgebanding workpieces (2) made of wood or similar materials comprises a plurality of operating units positioned along an advancing path of the workpieces (2) to apply a laminar element to an edge of the workpiece.

In order to obtain an edgebanding machine (1) that is constructionally cheap and simple, in which the workpieces (2) are advanced with a regular motion and are retained in a firm and effective manner, there is provided a timing belt (12) that is configured for supporting the workpieces (2) on a driving portion (61) thereof and for advancing with said driving portion (61) in an advancing direction (X) along the advancing path.

## Description

The invention relates to an edgebanding machine, in particular of the single-sided linear type, for edgebanding workpieces made of wood or similar materials.

Edgebanding machines are known for applying laminar elements to edges of workpieces, for example panels, tables, doors, hatches, and the like, made of wood or similar materials. Such machines comprise a chain for supporting and advancing the workpieces to be edgebanded along an advancing path through a machining zone of the machines. The chain, which is closed in a loop around a driving pulley and one or more driven pulleys, consists of a plurality of tracks connected to one another, each, rectangular in shape and provided with a surface covered in polymeric material.

Known machines are further provided with a presser extending longitudinally above the chain at the machining zone. The presser, including a plurality of rollers, is arranged for keeping pressed, during edgebanding, the workpieces to be edgebanded against the chains.

Known machines further comprise, at the machining zone, a plurality of operating units, positioned in sequence along the advancing path and laterally with respect to the chain and to the presser, to perform edgebanding of the workpieces.

A drawback of known machines is that they are expensive and complicated to assemble. This is in particular due to the cost of the chain and to the precision required for assembling the latter.

A further drawback of known machines is that the chain does not ensure regular movement of the workpieces. In fact, near the pulleys around which the chain is closed, the tracks of the chain are arranged so as to form a broken polygonal line (the so-called 'polygonal effect'). This causes irregular motion of the workpiece, in particular an intermittent step motion characterised by accelerations and braking, which could cause finishing defects.

An object of the invention is to improve edgebanding machines.

A further object is to obtain an edgebanding machine that is cheap and simple to assemble.

A still further object is to provide an edgebanding machine in which the workpieces are moved through the machining zone with regular motion.

Such objects and still others are all achieved by an edgebanding machine made according to one or more of the claims listed below.

The invention can be better understood and implemented with reference to the attached drawings that illustrate an embodiment thereof by way of non-limiting example, in which:
Figure 1 is a frontal view of an edgebanding machine according to the invention;
Figure 2 is a partial and enlarged frontal view of pressing means included in the machine in Figure 1;
Figure 3 is a frontal view of conveying means included in the machine in Figure 1;
Figure 4 is a perspective view of the conveying means in Figure 3;
Figure 5 is a cross section of a timing belt included in the conveying means in Figure 3;
Figure 6 is a section taken along the plane VI-VI of the conveying means in Figure 3;
Figure 7 is an enlarged detail in Figure 6.

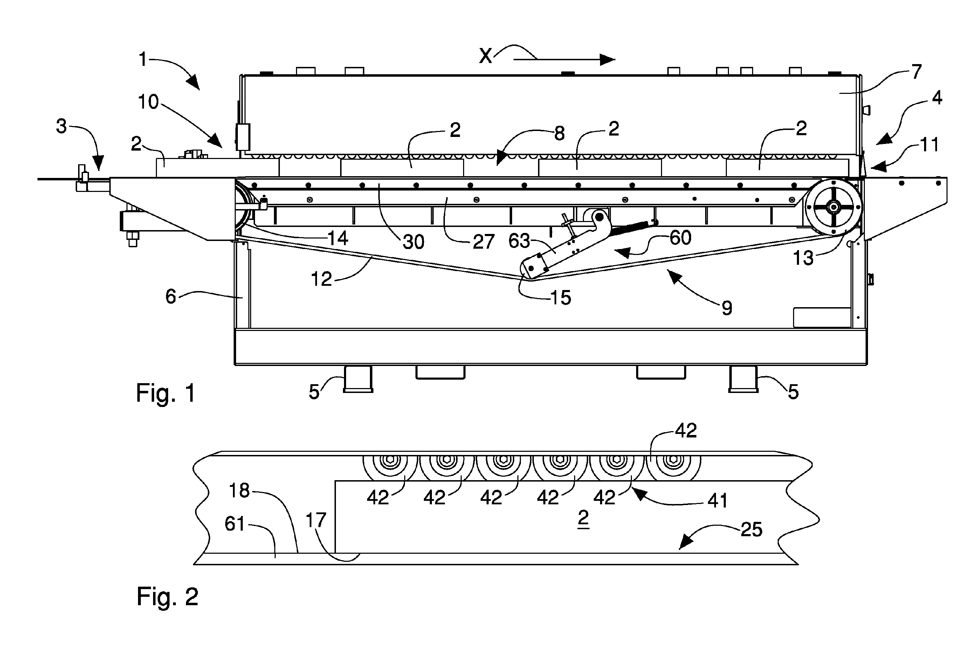

With reference to Figure 1 there is shown an edgebanding machine 1, in particular of the single-sided linear type, for edgebanding a workpiece 2, for example made of wood or similar materials.

The edgebanding machine 1 comprises a warehouse 3, for example of circular shape, arranged for supporting a laminar element in the form of a reel, which is not shown, to be applied to an edge of the workpiece 2.

The edgebanding machine 1 further comprises a frame 4, supported by a plurality of foot elements 5, which rest on a floor of a place in which the machine 1 is located.

The frame 4 includes a lower portion 6, that is contiguous with the foot elements 5. The lower portion 6 is internally hollow so as to define internally a cavity of a substantially prismatic shape. In this cavity, for example divided into several chambers that are adjacent to one another there are in particular located most of the electric cables that are necessary for the operation of the machine 1. Further, this cavity can receive a tank, which is not shown, containing an adhesive substance, typically glue, that is used for gluing the laminar element to the workpiece 2.

The frame 4 further comprises an upper portion 7, which is also, for example, hollow, such as to define internally a further cavity of substantially prismatic shape. The upper portion 7 can receive a plurality of operating units, which are not shown but are disclosed in greater detail below, which are arranged for performing subsequent machinings on the workpiece 2.

The lower portion 6 and the upper portion 7 can be separated by a machining zone 8, in which the workpiece 2 is machined. The machining zone 8 is thus substantially bounded by the upper portion 7 above and by the lower portion 6 below.

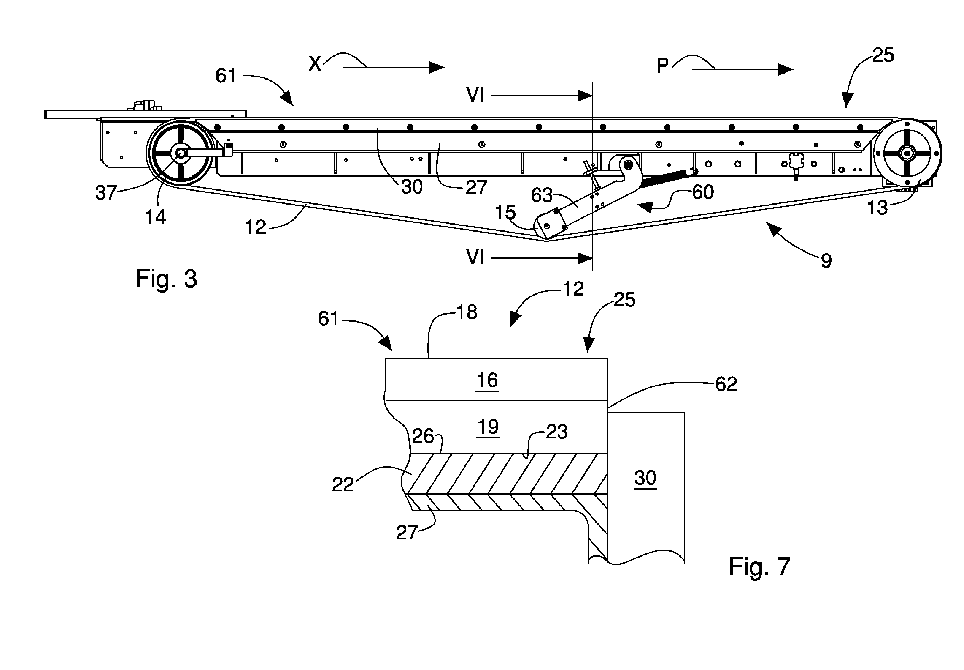

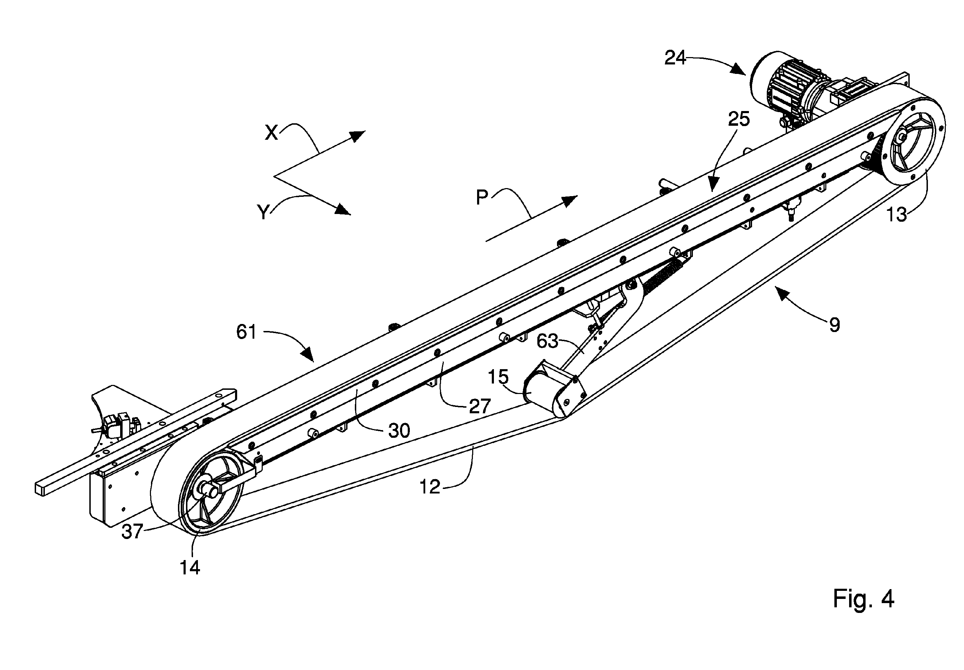

The edgebanding machine 1 further comprises conveying means 9 for moving the workpiece 2 along an advancing path P (Figures 3 and 4) from an entry zone 10 to an outlet zone 11 of the machine 1. In the advancing path P, extending substantially parallel to an advancing direction X, the advancing workpiece 2 is subject to successive machinings by the aforesaid plurality of operating units mounted on the machine 1.

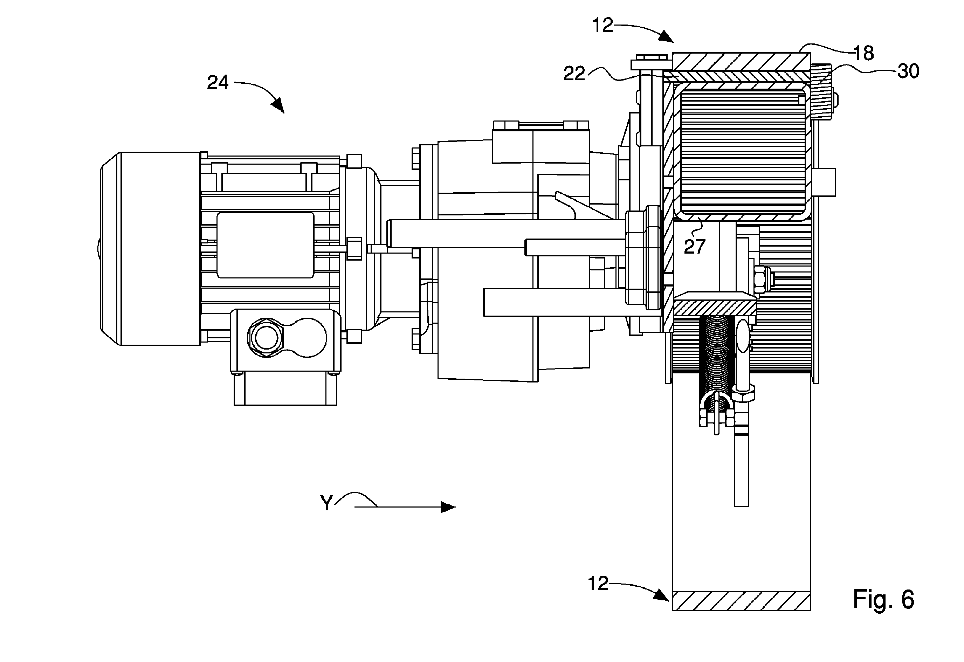

The aforesaid conveying means 9 comprises a timing belt 12 closed in a loop around a driving pulley 13, a driven pulley 14 and an idle pulley 15, the latter being part of a belt tightener 60 arranged for keeping timing belt 12 tensioned. The driving pulley 13 can be driven by a gearmotor 24, shown in Figure 6.

Whilst the workpiece 2 advances in the advancing path P, it can be kept pressed against the timing belt 12 by pressing means 41, shown in an enlarged manner in Figure 2. The latter, comprising for example a plurality of rollers 42, exert a downward thrust on the workpiece 2 in a substantially vertical direction.

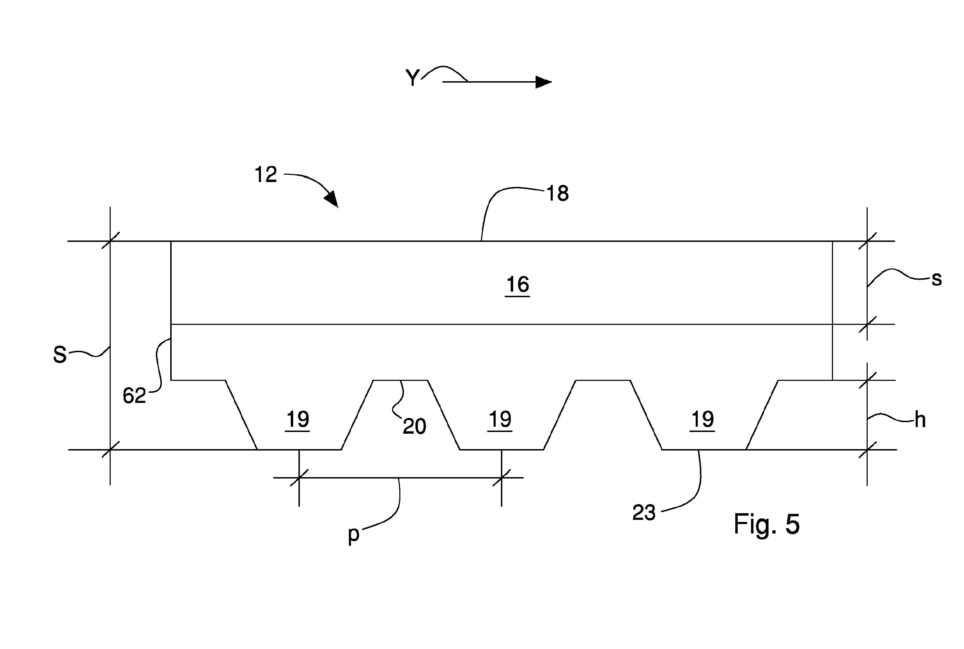

The aforesaid timing belt 12, a section of which is shown in greater detail in Figure 5, comprises a driving portion 61 (Figures 3 and 4) that is defined as that portion of timing belt 12 that extends, in the direction of movement, from the driven pulley 14 to the driving pulley 13, and is tensioned. In particular, the driving portion 61 comprises that portion of timing belt 12 facing the machining zone 8.

The timing belt 12 is made of an elastomer, in particular polyurethane, has a thickness S comprised between 12 and 14 mm, in particular equal to 13 mm, and a pitch p comprised between 8 and 12 mm, in particular equal to 10 mm.

The timing belt 12 comprises an outer supporting layer 16, having a thickness s comprised between 2 and 8 mm, in particular equal to 6 mm. The supporting layer 16, made, for example, of elastomer, in particular polyurethane and polyvinyl chloride, is configured for being brought into contact with the workpiece 2. In other words, a lower surface 17 of the workpiece 2 rests on a contact surface 18 of the supporting layer 16.

It should be noted that this supporting layer 16 enables a high friction coefficient to be obtained between the lower surface 17 of the workpiece 2 and the contact surface 18. The timing belt 12 further comprises a plurality of teeth 19, having, for example, a trapezium or curved profile that are separated by gaps 20. The height h of the teeth 19 is comprised between 1.5 and 3.5 mm, in particular equal to 2.5 mm.

The teeth 19 define a sliding surface 23, opposite the contact surface 18, and are covered in fabric to reduce wear and improve the sliding capacity on a resting plane 22 of the edgebanding machine 1, described below (Figure 7).

In use, further, the teeth 19 mesh with the driving pulley 13, with the driven pulley 14 and with the idle pulley 15. Also, the timing belt 12 can comprise steel strands, which are not shown, to reduce elongation in use.

During use the timing belt 12 is further brought laterally into contact with a side containing element 30, that, as will be explained better below, limits a side movement of the timing belt 12.

The contact surface 18 disclosed above defines a conveying plane 25 (Figure 7) on which the workpiece 2 is made to advance along the advancing path P.

The aforesaid resting plane 22, extending substantially along the advancing direction X, comprises a coupling surface 26, in contact with, and on which slide, the teeth 19. In particular, note that the driving portion 61 of the timing belt 12 slides on the resting plane 22. In order to promote sliding of the driving portion 61 on the resting plane 22, the coupling surface 26 can be subjected to mechanical machinings that give the coupling surface 26 low surface roughness.

The resting plane 22 can be fixed to an elongated element 27, for example a hollow steel bar with a substantially square section shown in Figures 6 and 7. This elongated element 27 can be extended prevalently along the advancing direction X, between the driving pulley 13 and the driven pulley 14, and supports the resting plane 22.

The elongated element 27 can be supported by a fixed bar connected to the frame 4. From the latter, substantially at a median zone of the bar, an arm 63 extends that rotatably supports the idle pulley 15, which in turn comes into contact with and tensions the timing belt 12.

In particular, the idle pulley 15 comprises toothing having a shorter pitch than the pitch p of the timing belt 12, this contributing to removing, during use, any dirt and/or machining residue found in the gaps 20.

To the elongated element 27 the aforesaid side containing element 30 can be fixed, in particular made of plastics, such as, for example, polyzene. The side containing element 30 can extend near the driving portion 61 of the timing belt 12 along the advancing direction X substantially for a length that is equal to that of the elongated element 27 and can be fixed to the latter by a plurality of fixing means, in particular threaded screws, which are not shown.

The side containing element 30, during use, makes lateral contact with the timing belt 12 at a side contact surface 62, made, at least partially, of elastomer, in particular polyurethane (Figure 7).

In particular, the side containing element 30 can be brought laterally into contact with a suitable portion of the thickness S of the timing belt 12, such as to lock the timing belt 12 and limit movements of the timing belt 12 along a direction Y (Figure 4), that is substantially perpendicular to the advancing direction X.

It should be noted that the side containing element 30 is arranged in such a manner as to be at a lower vertical height than the conveying plane 25 defined by the contact surface 18 on which the workpiece 2 rests.

The edgebanding machine 1 can further comprise a supporting bar, which is not shown, extending for a length that is substantially the same as the length of the machine 1 along the advancing direction X. This supporting bar is movable along the direction Y for supporting, via a plurality of revolving elements, the workpiece 2 to be machined in cooperation with the driving portion 61 of the timing belt 12. It should be noted that the points of contact between such revolving elements and the workpiece 2 are substantially comprised in the conveying plane 25.

The edgebanding machine 1 can comprise an encoder 37 (Figure 2) mounted coaxially on a shaft of the driven pulley 14 to detect an angular position of this shaft and thus of the driven pulley 14.

The edgebanding machine 1 further comprises a control and management unit, which is not shown, for commanding and controlling the plurality of operating units that operate on the workpiece 2 and the conveying means 9, in particular the advancing of the timing belt 12. The control and management unit can also be arranged for receiving the electric signals emitted by the encoder 37 indicating the angular position of the driven pulley 14, and consequently the advancing of the timing belt 12. It should be noted that the encoder 37, mounted on the driven pulley 14, enables the position of the timing belt 12 to be detected, that is considered to coincide substantially with the angular position of the driven pulley 14.

Also, the machine 1 can be provided with an interface, which is not shown, by means of which an operator can enter the parameters of the workpiece 2 and of the machinings to be performed inside the control and management unit.

In use, the edgebanding machine 1 enables a laminar element to be applied to an edge of a workpiece 2, for example made of wood or similar materials, i.e. enables the workpiece 2 to be edgebanded.

Initially, the operator positions the laminar element, possibly in the shape of a reel, on a warehouse 3 of the edgebanding machine 1. It should be noted that this operation might not be necessary if the laminar element with which the workpiece 2 is to be edgebanded is the same used for edgebanding other workpieces that have just been machined.

Subsequently, the operator positions the workpiece 2 at the entry zone 10 of the edgebanding machine 1, resting the workpiece 2 on the driving portion 61 of the timing belt 12 and, possibly, on the supporting bar.

When the gearmotor 24 drives the timing belt 12, the workpiece 2 advances along the advancing path P substantially parallel to the advancing direction X. In this manner, the workpiece 2 traverses the machining zone 8, in which the operating units included in the machine 1 perform successive machinings thereupon. It should be noted that during traversing of the machining zone 8, the workpiece 2 is maintained pressed against the driving portion 61 of the timing belt 12 by the pressing means 41.

The operating units of the edgebanding machine 1 are those mounted on known edgebanding machines.

In particular, the aforesaid operating units comprise in succession along the advancing direction X: a gluing unit for gluing the laminar element to an edge of the workpiece 2, a pressing unit operationally positioned after the gluing unit to press the laminar element against the edge of the workpiece 2 so as to fix the laminar element to the latter. Also, the operating units comprise at least one operating unit for removing, from the laminar element fixed to the edge, material protruding from the side and/or top and/or bottom of said edge. In particular, this at least one operating unit comprises a heading unit for cutting a portion of laminar element protruding from the side of the edge of the workpiece 2 and/or trimming unit for trimming the laminar element with respect to the edge of the workpiece 2 by removing the material protruding above and below the edge of the workpiece 2.

The operating units further comprise, optionally, at least one finishing unit for performing surface finishing on the edge of the workpiece. In particular, the finishing unit comprises a scraping unit for finishing the edge of the workpiece 2, and, optionally, brushes for cleaning and polishing the edge of the workpiece 2 to which the laminar element has been applied.

Subsequently, the workpiece 2 exits the machining zone 8 at the outlet zone 11, from which the operator can remove the workpiece 2. At this point, a laminar element has been applied to an edge of the workpiece 2 and the operations disclosed above have to be repeated a number of times that is the same as the number of edges of the workpiece 2 that have to be edgebanded, so the operations generally have to be repeated another three times such as to complete edgebanding of the workpiece 2.

It should be noted that the timing belt 12, in addition to being cheaper than the chain used by known machines, can be easily assembled and dismantled by an operator and in a very short time, thus making the edgebanding machine 1 not much expensive and constructionally simple.

Further, it should be noted that the timing belt 12 enables the workpieces 2 to be moved with a regular motion, and without slipping, through the machining zone 8. In particular, the 10 mm pitch p enables both good traction and good motion regularity to be obtained. It should be noted that the lack of slipping also contributes to reducing wear to the timing belt 12 and to increasing motion precision. Further, it should be noted that as the supporting layer 16 has a high friction coefficient with the workpiece 2 it enables the workpiece 2 to be retained in a firm and effective manner.

In a version of the invention that is not shown, the timing belt 12 can be made from materials other than those disclosed above.

## Claims

1. Edgebanding machine (1) for edgebanding a workpiece (2) made of wood or similar materials, comprising conveying means (9) for conveying said workpiece (2) along an advancing path (P) and a plurality of operating units positioned along said advancing path (P) to apply a laminar element to an edge of said workpiece (2), **characterised in that** said conveying means (9) comprises a timing belt (12) configured for supporting said workpiece (2) on a driving portion thereof (61) and for advancing with said driving portion (61) in an advancing direction (X) along said advancing path (P).

2. Machine according to claim 1, wherein said timing belt (12) is made of an elastomer, in particular polyurethane.

3. Machine according to claim 1, or 2, wherein said timing belt (12) comprises a support layer (16) made of an elastomer, in particular polyurethane, and polyvinyl chloride (PVC), said support layer (16) including a contact surface (18) for contacting said workpiece (2).

4. Machine according to claim 3, wherein said support layer (16) has a thickness (s) comprised between 2 and 8 mm, in particular equal to 6 mm.

5. Machine according to any preceding claim, wherein said timing belt (12) comprises a plurality of fabric-covered teeth (19).

6. Machine according to claim 5, wherein said teeth (19) have a height (h) comprised between 1.5 and 3.5 mm, in particular equal to 2.5 mm.

7. Machine according to any preceding claim, wherein said timing belt (12) has a thickness (S) comprised between 12 and 14mm, in particular equal to 13mm.

8. Machine according to any preceding claim, wherein said timing belt (12) has a pitch (p) comprised between 8 and 12 mm, in particular equal to 10 mm.

9. Machine according to any one of claims 5 to 8, as claim 7 is appended to claim 5, and comprising a belt tightener (60), to keep said timing belt (12) tensioned, provided with a pulley (15) meshing with said teeth (19), said pulley (15) including a toothing which has a shorter pitch than that of said timing belt (12).

10. Machine according to any one of claims 5 to 9, as claim 7 is appended to claim 5, and comprising a resting plane (22) arranged below said driving portion (61) and adjacent thereto in such a manner as to contact said teeth (19) at least when said driving portion (61) supports said workpiece (2).

11. Machine according to any preceding claim, and further comprising a side containing element (30) extending alongside said timing belt (12) to limit a side movement of said timing belt (12) along a direction (Y) that is substantially transverse to said advancing direction (X), said side containing element (30) operating in contrast with a side thrust action of at least one of said units operating on said timing belt (12).

12. Machine according to claim 11, wherein said side containing element (30) is arranged below a conveying plane (25) defined by said timing belt (12).

13. Machine according to claim 11, or 12, wherein said timing belt (12) comprises at least one side surface (62) for contacting said side containing element (30), said lateral surface being made, at least partially, of elastomer, in particular polyurethane.

14. Machine according to any preceding claim, wherein said timing belt (12) comprises strands, in particular made of steel, configured to reduce elongation of said timing belt (12).
